# EUROPEAN PATENT SPECIFICATION

(11) **EP 3 039 215 B1**
(45) Date of publication and mention of the grant of the patent: **14.03.2018**
(21) Application number: 14761556.1
(22) Date of filing: 08.08.2014
(51) Int. Cl.: E06B 3/30

(54) **FASTENING CLIP AND METHOD FOR FASTENING A FINISHING FRAME AGAINST A FRAME OF A WINDOW OR SIMILAR AND WINDOW EQUIPPED WITH SUCH A FASTENING CLIP**
BEFESTIGUNGSKLAMMER UND VERFAHREN ZUR BEFESTIGUNG EINES FERTIGUNGSRAHMENS AN EINEM RAHMEN EINES FENSTERS ODER DERGLEICHEN SOWIE MIT SOLCH EINER BEFESTIGUNGSKLAMMER AUSGERÜSTETES FENSTER
PINCE DE FIXATION ET PROCÉDÉ DE FIXATION D'UN CADRE DE FINITION CONTRE UN CHÂSSIS D'UNE FENÊTRE OU SIMILAIRES ET FENÊTRE MUNIE D'UNE TELLE PINCE DE FIXATION

(30) Priority: 28.08.2013 BE 201300561
(43) Date of publication of application: 06.07.2016
(73) Proprietor: Reynaers Aluminium, naamloze vennootschap, 2570 Duffel (BE)
(72) Inventor: VLOEMANS, Véronique, 2520 Oelegem (BE)
(74) Representative: Donné, Eddy
(86) International application number: PCT/BE2014/000037
(87) International publication number: WO 2015/027300

(56) References cited:
- EP-A1- 0 969 177
- EP-A2- 1 338 746
- WO-A1-93/04256

## Description

Fastening clip and method for fastening a finishing frame against a frame of a window or similar and window equipped with such a fastening clip.

The present invention relates to a fastening clip for fastening a finishing frame to a frame of a window, door or similar and to a method using such fastening clip. It is known that windows with a frame composed of aluminium profiles for example are often provided with a finishing frame, such as a decorative frame of wood for example, to enhance the aesthetic appearance for example.

Here the aluminium frame and the wooden frame of the finishing frame are made of profiles, after which both frames are fastened together.

In order to do this fastening, a plastic intermediate profile is known that is fastened over the entire periphery of the frame by means of a snap-on connector, after which the finishing frame can be snapped onto the intermediate profile. The necessary grooves are provided to this end, both in the frame and in the finishing frame.

Such an intermediate profile has the disadvantage that it is difficult to fasten and that the difference in the expansion factor between the wood and aluminium can only be accommodated to a limited extent.

Because it is difficult to fasten, in most cases the finishing frame is mounted on the aluminium frame in the workshop beforehand and the assembled unit is supplied to the site. This has the disadvantage that the wooden frame is exposed to possible damage that can occur during the installation of the frame in a wall, which can damage the sturdiness of the finishing frame and/or the connection, and can also reduce the aesthetic appearance.

Damage can also occur during the further construction phase and finishing of the wall and/or the building. For example due to the high moisture content from plastering walls or laying screed, which in combination with poor ventilation and a lack of heating can lead to mould formation on the wooden finishing frame or warping of the finishing frame.

On the other hand, a fastening technique is known based on a type of clip provided with bayonet catches that are placed in an undercut groove provided to this end in the profile, whereby the other profile with a corresponding undercut groove is placed against it and after which the clip is turned to fasten both profiles to one another making use of a suitable tool for example that can grip up to the clip between the frame and the finishing frame.

Although such clips are easy to install, this has the disadvantage that the profile or frame must be horizontal to prevent the clips sliding in the groove or falling out of the groove.

Consequently the mounting is also done beforehand by fastening the frame to the finishing frame in the workshop before the frame is installed in a wall of a building or similar.

A additional disadvantage is that when the finishing frame is to be removed and the clips released, the orientation of the clips must be known, which means that the removal can be a time-consuming and difficult task.

The document EP 0 969 177 A discloses a fastening clip according to the preamble of claim 1.

The purpose of the present invention is to provide a solution to at least one of the aforementioned and other disadvantages by providing a fastening clip for fastening a finishing frame against a frame of a window or similar, whereby the frames are composed of profiles and whereby the fastening clip consists of a central part and two coaxial bayonet catches on either side of the central part, respectively one bayonet catch for affixing the fastening clip in an undercut groove provided to this end in the frame and the fastening thereof by rotating the fastening clip and one bayonet catch for affixing the fastening clip in an undercut groove provided to this end in the finishing frame and the fastening thereof by rotating the fastening clip, whereby the fastening clip is provided with means to temporarily hold the fastening clip upon being affixed in the groove of the frame or the finishing frame and with at least one radially-oriented wing on the central part that can act as a lever for turning the fastening clip, whereby the means for temporarily holding the clip are formed by a snap-on connector, which is formed by two elastic hooks that are provided in the width of the bayonet catch on either side of the bayonet catch and which are affixed by their foot to the central part and whose hook-shaped end is movable in the direction of the width of the bayonet catch concerned. Undercut groove here means a groove in which the width of the opening is narrower than the width of the base of the groove.

An advantage is that a fastening clip according to the invention cannot slide in the groove or fall out of the groove when the frame or the finishing frame in which the clip is affixed is not horizontal.

As a result it is possible to fasten a finishing frame to a frame of a window or similar already built into a wall by affixing the fastening clips in a groove of the frame or the finishing frame.

Another advantage is that the fastening clip can easily be rotated by means of at least one radially-oriented wing.

An advantage is that a snap-on connector enables a fast and simple temporary secure connection of the fastening clip to a frame by snapping the fastening clip into the groove provided to this end.

In a preferred embodiment at least one.wing is constructed as a slat that is affixed radially to the central part and which is provided with at least one notch in one of its radially-oriented edges at its furthest end, whereby the wing is preferably provided with two notches opposite one another in the transverse direction.

This has the advantage that to turn the fastening clip use can be made of a tool such as a screwdriver that fits in the notch, whereby by exerting a force on the wing with the tool the fastening clip can be turned.

The force can also be exerted on the wing by hand, without using a tool or similar.

In the most preferred embodiment there are two radial wings that extend diametrically opposite one another.

This has the advantage that the fastening clip can be constructed symmetrically, such that when releasing the fastening clip again, the orientation of the fastening clip does not need to be known.

The invention also comprises a method for fastening a finishing frame against a frame of a window or similar, making use of fastening clips according to any of the claims 1 to 11, consisting of a central part provided with two coaxial bayonet catches on either side of the central part, with means to temporarily hold the fastening clip in the frame or the finishing frame and at least one radially-oriented wing on the central part, whereby the method comprises the following steps:
- the affixing of fastening clips in a groove provided to this end in one of the two frames with at least one wing transverse to the groove in such a way that the clips are temporally held by the aforementioned means;
- the affixing of the other frame provided with a groove, ensuring that the frame to be affixed is affixed with its groove over the bayonet catches of the already affixed fastening clips;
- the mutual securing of both frames by turning the fastening clips around the axis of the bayonet catches by acting on at least one wing to turn it to a position parallel to the longitudinal direction of the grooves.

Such a method will enable a finishing frame to be easily and rapidly fastened to a frame of a window or similar, whereby there is also no need for special tools to secure the fastening clips.

An additional advantage is that such a method can also be applied when the frame and/or the finishing frame is not horizontal. As a result, the method can also be applied when the frame is already installed in a wall or similar, for example.

The invention also relates to a window consisting of a frame with a finishing frame fastened thereto, whereby the finishing frame is fastened to the frame by means of one or more fastening clips according to one of the previous claims, whereby the central parts of the fastening clips extend between both frames and are fastened thereto by the bayonet catches on either side of the central part extending respectively in a groove of the connected frames in a position whereby the fastening clips are turned to a position whereby the wings extend essentially parallel to the respective frames.

With the intention of better showing the characteristics of the invention, a few preferred embodiments of a fastening clip according to the invention for fastening a finishing frame against a frame, a method thereby applied, and a window equipped with such a fastening clip are described hereinafter by way of an example, without any limiting nature, with reference to the accompanying drawings, wherein:
figure 1 schematically shows a perspective view of a fastening clip according to the invention;
figure 2 schematically shows a perspective view according to the arrow P2 of figure 1;
figure 3 schematically shows a frame in which fastening clips according to the invention are affixed;
figure 4 schematically shows a cross-section according to the line Vi-VI of figure 3;
figures 5 and 6 schematically show the fitting and fastening of a finishing frame to the frame.

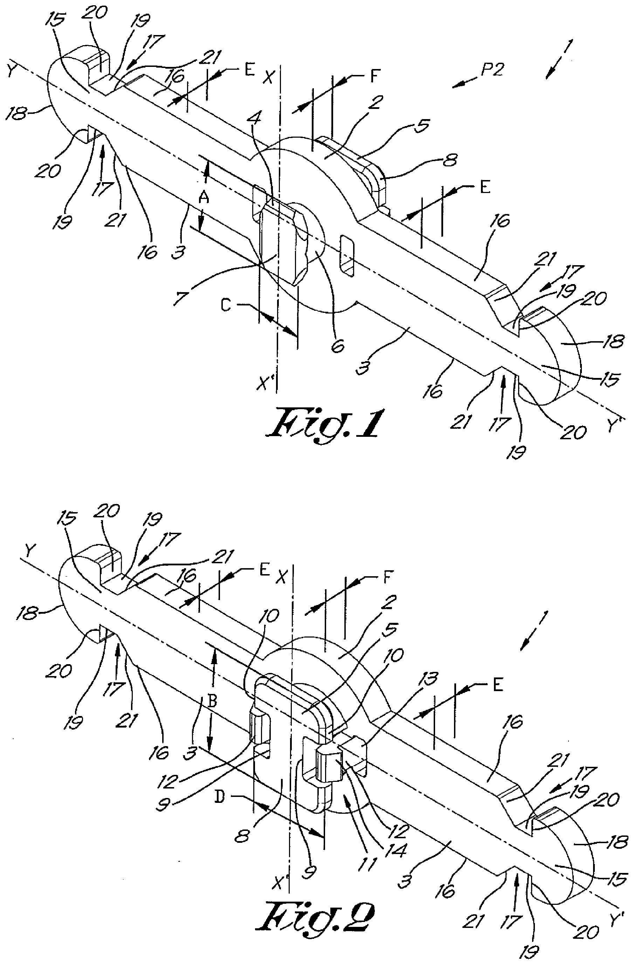

The fastening clip 1 schematically shown in figures 1 and 2 essentially comprises a central part 2 with two radial wings 3 that extend diametrically opposite one another.

The central part 2 is disk shaped and is provided with a bayonet catch 4,5 on either side.

Each bayonet catch 4, respectively 5, is formed by a journal 6 with an asymmetrically widened head 7, respectively 8, with a length A, respectively B, and a width C, respectively D, along two radial directions X-X' and Y-Y' transverse to one another.

In this case the head 7,8 is rectangular with rounded corners, whereby one head 8 is provided with a constriction of the width D in the form of recesses 9 in opposite edges 10.

One of the bayonet catches 5 is provided with a snap-on connector 11, which is formed by two elastic hooks 12 with a foot 13 and a hook-shaped end 14.

The hooks 12 are provided in the width D of this bayonet catch on either side thereof, whereby their foot 13 is affixed to the central part 2 and the hook-shaped end 14 can move in the direction of the width Y-Y' of the bayonet catch 5.

The hook-shaped ends 14 can move elastically between a rest position whereby the hooks 12 protrude past the width D of the head 8 of the bayonet catch 5, as shown in figure 2, and a pressed-in position whereby the hooks 12 are pressed in the aforementioned recesses 9.

The wings 3 are constructed as a slat that is affixed radially to the central part 2, whereby the thickness E of the wings 3 is the same as the thickness F of the central part 2.

Each slat 3 is provided at its furthest end 15 in its radially-oriented edges 16 with two notches 17 opposite one another in the transverse direction X-X', whereby in this case the furthest end 15 is constructed as a rounded head 18.

The notches 17 are defined by a base 19 and two sidewalls 20, 21. One sidewall 20 is transverse to the longitudinal direction Y-Y' of the wing, while the other sidewall 21 is oriented obliquely to the longitudinal direction Y-Y'.

The oblique sidewall 21 extends obliquely from the base 19 to the edge 16 in the direction of the central part 2, as shown in figures 1 and 2.

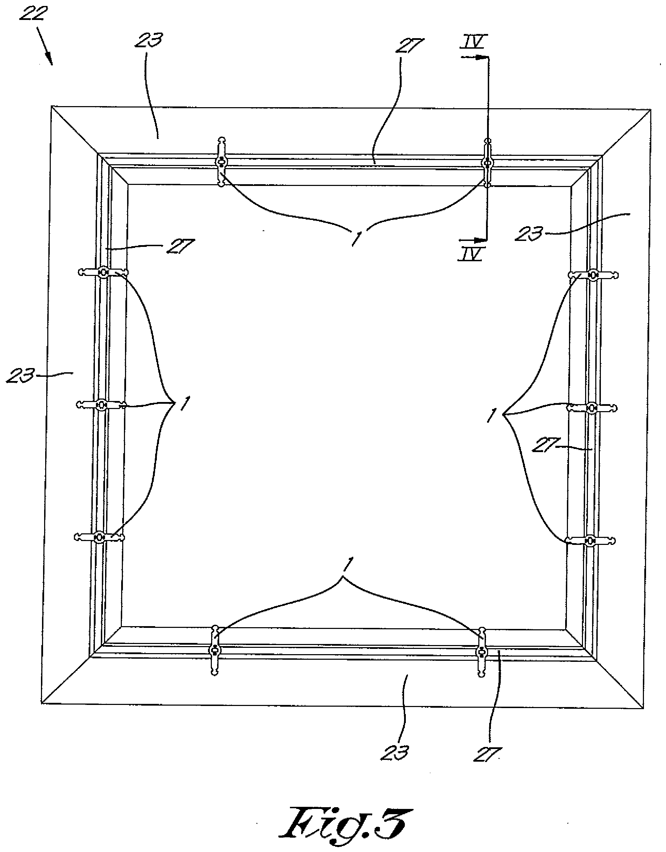

The fastening clip 1 can be used to fasten a finishing frame against a frame 22, as shown in figure 3 for example.

The frame 22 of figure 3 is composed of profiles 23 that are connected together at their ends in a suitable way, whereby the frame 22 can be built into an opening of a wall or similar and whereby in this case the frame 22 is made of aluminium.

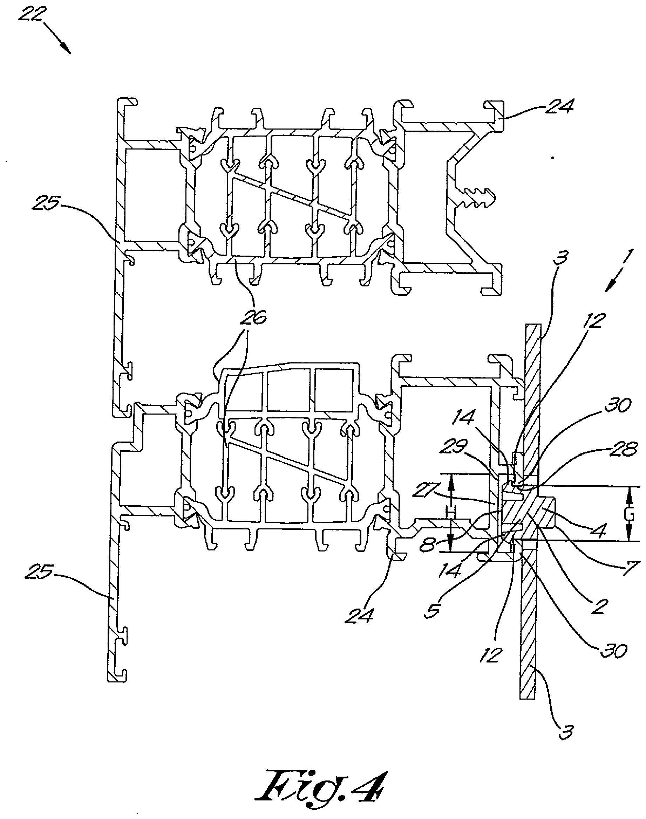

As shown in figure 4, the profiles 23 are composed of two half shells 24 and 25, respectively an inner shell 24 that is oriented towards the inside of the building, and an outer shell 25 that is oriented towards the outside of the building.

The two half shells 24, 25 are connected together by means of insulating courses 26 that ensure a thermal break between the inner shell 24 and the outer shell 25.

In the frame 22, more specifically in the inner shell 24, an undercut groove 27 is provided that extends as it were over the entire periphery of the frame 22.

The groove 27 has an opening 28 whose width G measured perpendicularly to the longitudinal direction of the groove 17 is less than the width H of the base 29 of the groove 27 measured in the same direction, due to the groove 27 being provided with overhanging edges 30 at the level of the opening 28.

Hereby the width G of the opening 28 is greater than the width D of the head 8 of the bayonet catch 5 and smaller than the length B of the head 8.

The use of the fastening clips 1 as shown in figures 1 and 2 for fastening a finishing frame against a frame 22 is very simple and as follows, and is shown in figures 3 to 6.

As shown in figure 3, a number of fastening clips 1, in this case ten, spread evenly over the entire periphery of the frame 22 are affixed in the groove 27 provided to this end in the frame 22.

To this end, the bayonet catch 5 is pressed against the groove 27, whereby the wings 3 extend transversely in the longitudinal direction of the groove 27, such that the width D of the head 8 of the bayonet catch 5 extends in the direction of the width G of the opening 28 of the groove 27.

The elastic hooks 12 will be moved to the pressed-in position, such that the head 8 of the bayonet catch 5 can be pressed in the groove 27 as the width D of the head is smaller than the width G of the opening 28.

When the head 8 is in the groove 27, the elastic hooks 12 will again move to the rest position, whereby the hook-shaped ends 14 will be secured behind the overhanging edges 30 in order to temporarily hold the fastening clip 1 in the groove 27 of the frame 22.

In the next step a finishing frame 31 is affixed. In this case the finishing frame 31 is affixed on the inside the building, against the inner shell 24. However, it is not excluded that a finishing frame 31 is affixed against the outer shell 25, by providing the frame 22 in the outer shell 25 with an undercut groove 27.

The finishing frame 31 can be a decorative frame or similar made of wood and can also be constructed from profiles.

The finishing frame 31 is also provided with an undercut groove 32 with overhanging edges 30' that extends over the entire periphery of the finishing frame 31.

Here the width I of the opening 33 of the groove 32 is greater than the width C of the head 7 of the bayonet catch 4 and smaller than the length A of the head 7.

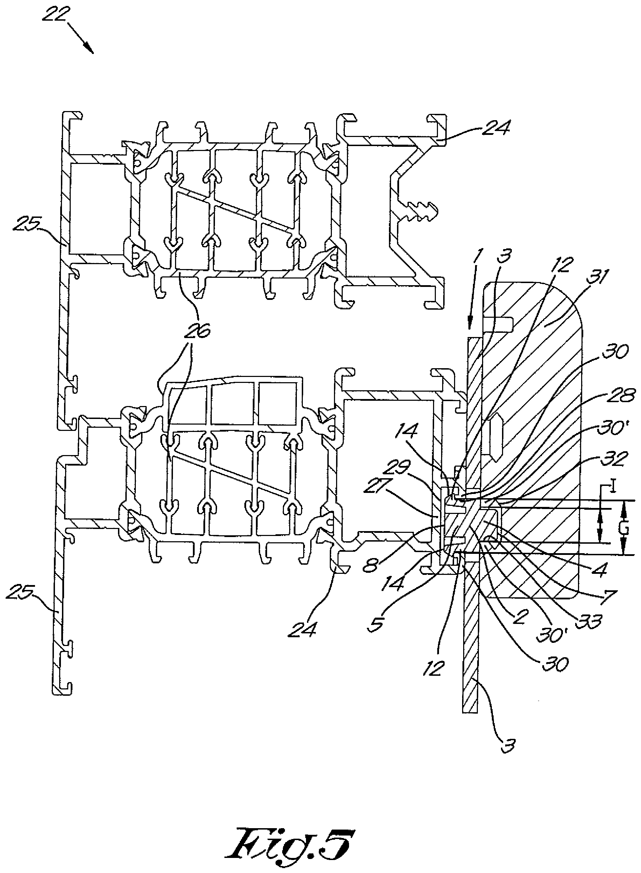

When affixing the finishing frame 31 it is ensured that it is affixed with its groove 32 over the bayonet catches 4 of the fastening clips 1, as shown in figure 5.

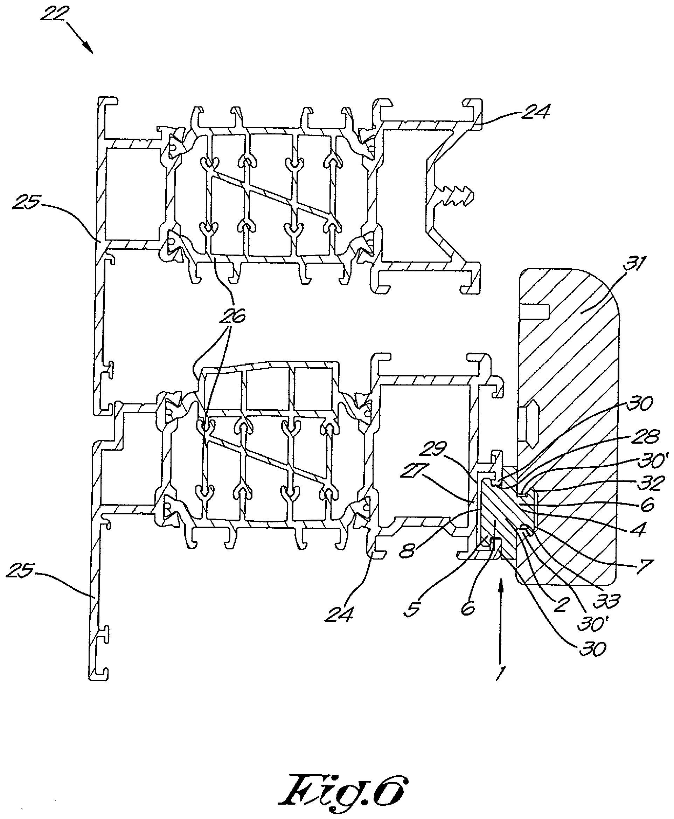

In a last step both frames 22, 31 are secured together by turning the fastening clips 1 around the axis of the bayonet catches 4, 5 so that the wings 3 extend parallel to the longitudinal direction of the grooves 27, 32, as shown in figure 6.

This is realised by turning the wings 3 by approximately a quarter turn by exerting a force on at least one of the wings 3 of the fastening clip 1.

This can be done by hand, but it is also possible that use is made of a screwdriver or another tool, by letting it engage in a notch 17 and exerting a force on the wing 3 with the aid of the tool.

Due to the oblique sidewall 21 it will be possible to place the tool at an angle in the notch 17, whereby the sidewall 20 that is oriented transversely to the longitudinal direction Y-Y' of the wing 3 will prevent the tool from being able to slip out of the notch 17.

By turning the fastening clip 1, the bayonet catches 4,5 concerned are rotated around their axis, such that the length A, respectively B, of the head 7, respectively 8, extends in the direction of the width of the groove 32, respectively 27.

As a result the head 7, 8 will grip behind the overhanging edges 30, 30', such that the fastening clips 1 are securely connected to the frames 22, 31 by means of the bayonet catches 4, 5, and in this way ensure the fastening of the finishing frame 31 to the frame 32.

Although in the example described above the fastening clips 1 were affixed and temporarily secured in the frame 22, it is not excluded that the fastening clips 1 are affixed and temporally secured in the finishing frame 31, before affixing the finishing frame 31 against the frame 22.

It goes without saying that in this case the bayonet catch 4 that is intended to be affixed in the groove 32 of the finishing frame 31, is provided with a snap-on connector 11 in order to make it possible to temporarily secure the fastening clips 1 in the finishing frame 31.

It is hereby possible that the snap-on connector 11 is absent on the other bayonet catch 5 or that a snap-on connector 11 is provided on both sides of the fastening clip 1.

Although in the example described above, a pane of glass or similar is not yet affixed in the frame 22 before the fastening clips 1 are affixed, it is clear that the pane of glass can also be present in the frame 22 before the fastening clips 1 are affixed in the frame 22.

The present invention is by no means limited to the embodiments described as an example and shown in the drawings, but by the scope of the attached claims.

## Claims

1. Fastening clip for fastening a finishing frame (31) against a frame (22) of a window or similar, whereby the frames (22, 31) are composed of profiles (23) and whereby the fastening clip (1) consists of a central part (2) and two coaxial bayonet catches (4, 5) on either side of the central part (2), respectively one bayonet catch (5) for affixing the fastening clip (1) in an undercut groove (27) provided to this end in the frame (22) and the fastening thereof by rotating the fastening clip (1) and one bayonet catch (4) for affixing the fastening clip (1) in an undercut groove (32) provided to this end in the finishing frame (31) and the fastening thereof by rotating the fastening clip (1), wherein the fastening clip (1) is provided with means to temporarily hold the fastening clip (1) upon being affixed in the groove (27) of the frame (22) or the finishing frame (31) and with at least one radially-oriented wing (3) on the central part (2) that can act as a lever for turning the fastening clip (1), **characterised in that** the afore-mentioned means to temporarily hold the fastening clip are formed by a snap-on connector (11), which snap-on connector (11) is formed by two elastic hooks (12) that are provided in the width of the bayonet catch (5) on either side of the bayonet catch (5) and which are affixed by their foot (13) to the central part (2) and whose hook-shaped end (14) is movable in the direction of the width of the bayonet catch (5) concerned.

2. Fastening clip according to claim 1, **characterised in that** the bayonet catch (4, 5) is formed by a journal (6) with an asymmetrically widened head (7, 8) with a different length (A, B) and width (C, D) along two radial directions transverse to one another, whereby the width (C, D) is narrower than the width (G, I) of the groove (27, 32) in which the bayonet catch must be fastened, and the length (A, B) is greater than the width (G, I) of the aforementioned groove (27, 32).

3. Fastening clip according to any one of the previous claims , **characterised in that** the head (8) of the bayonet catch (5) is provided with a constriction of the width in the form of recesses (9) in opposite edges (10) and that the hook-shaped ends (14) are elastically movable between a rest position, whereby the hooks (12) protrude past the width (D) of the head (8) of the bayonet catch (5), and a pressed-in position whereby the hooks (12) are pressed in the aforementioned recesses (9).

4. Fastening clip according to any one of the previous claims, **characterised in that** the aforementioned means to temporarily hold the fastening clip (1) upon being affixed in the groove (27) are only provided on one side of the fastening clip (1), i.e. on the side of the fastening clip (1) that is intended for being fastened in or against the frame (22).

5. Fastening clip according to any one of the previous claims, **characterised in that** at least one wing (3) is constructed as a slat that is affixed radially to the central part (2) and which is provided with at least one notch (17) in one of its radially oriented edges (16) at its furthest end (15).

6. Fastening clip according to claim 5, **characterised in that** the wing (3) is provided with two notches (17) opposite one another in the transverse direction (17).

7. Fastening clip according to claim 5 or 6, **characterised in that** the notches (17) are defined by a base (19) and two sidewalls (20, 21) whereby one sidewall (20) is oriented transversely and the other sidewall (21) obliquely with respect to the longitudinal direction of the wing (3).

8. Fastening clip according to claim 7, **characterised in that** the oblique sidewall (21) extends obliquely from the base (19) to the edge (16) in the direction of the central part (2).

9. Fastening clip according to any one of the previous claims, **characterised in that** the central part (2) is disk shaped and has the same thickness (F) as at least one wing (3).

10. Window consisting of a frame (22) with a finishing frame (31) fastened thereto, **characterised in that** the finishing frame (31) is fastened to the frame (22) by means of one or more fastening clips (1) according to one of the previous claims, whereby the central parts (2) of the fastening clips (1) extend between both frames (22, 31) and are fastened thereto by the bayonet catches (4, 5) on either side of the central part (2) extending respectively in a groove (27, 32) of the connected frames (22, 31) in a position whereby the fastening clips (1) are turned to a position whereby the wings (3) extend essentially parallel to the respective frames (22, 31).

11. Window according to claim 10, **characterised in that** the frame (22) is made of aluminium and the finishing frame (31) of wood.

12. Method for fastening a finishing frame (31) against a frame (22) of a window or similar, making use of fastening clips (1) according to any of the claims 1 to 11, consisting of a central part (2) provided with two coaxial bayonet catches (4, 5) on either side of the central part (2), with means to temporarily hold the fastening clip (1) in the frame (22) or the finishing frame (31) and at least one radially-oriented wing (3) on the central part (2), **characterised in that** the method comprises the following steps:
- the affixing of fastening clips (1) in a groove (27, 32) provided to this end in one of the two frames (22, 31) with at least one wing (3) transverse to the groove (27, 32) in such a way that the clips (1) are temporally held by the aforementioned means;
- the affixing of the other frame (22, 31) provided with a groove (27, 32), ensuring that the frame (22, 31) to be affixed is affixed with its groove (27, 32) over the bayonet catches (4, 5) of the already affixed fastening clips (1);
- the mutual securing of both frames (22, 31) by turning the fastening clips (1) around the axis of the bayonet catches (4, 5) by acting on at least one wing (3) to turn it to a position parallel to the longitudinal direction of the grooves (27, 32).

13. Method according to claim 12, **characterised in that** the fastening clips (1) are placed evenly spread over the entire periphery of the frame (22) or finishing frame (31).

14. Method according to claims 12 or 13, **characterised in that** the frame (22) is made of aluminium and the finishing frame (31) of wood.

15. Method according to any one of the claims 12 to 14, **characterised in that** in order to turn at least one wing (3) use is made of a tool, such as a screwdriver or similar, that fits in a notch (17) on a radial edge (16) of at least one wing (3).

## Patentansprüche

1. Befestigungsklammer zur Befestigung eines Fertigstellungsrahmens (31) an einem Rahmen (22) eines Fensters oder dergleichen, wobei die Rahmen (22,31) aus Profilen (23) zusammengestellt sind und wobei die Befestigungsklammer (1) aus einem zentralen Teil (2) und zwei koaxialen Bajonettverschlüssen (4, 5) an beiden Seiten des zentralen Teils (2) besteht, einem Bajonettverschluss (5) zum Anbringen der Befestigungsklammer (1) in einer zu diesem Zweck in dem Rahmen (22) vorgesehenen unterschnittenen Nut (27) und zum Befestigen davon durch Rotieren der Befestigungsklammer (1), beziehungsweise einem Bajonettverschluss (4) zum Anbringen der Befestigungsklammer (1) in einer zu diesem Zweck in dem Fertigstellungsrahmen (31) vorgesehenen unterschnittenen Nut (32) und zum Befestigen davon durch Rotieren der Befestigungsklammer (1), wobei die Befestigungsklammer (1) mit Mitteln zum zeitweiligen Festhalten der Befestigungsklammer (1) bei deren Anbringen in der Nut (27) des Rahmens (22) oder des Fertigstellungsrahmens (31) und mit mindestens einem radial ausgerichteten Flügel (3) an dem zentralen Teil (2), der als Hebel zum Drehen der Befestigungsklammer (1) wirken kann, versehen ist, **dadurch gekennzeichnet, dass** die vorgenannten Mittel zum zeitweiligen Festhalten der Befestigungsklammer durch einen Rastverbinder (11) gebildet werden, welcher Rastverbinder (11) durch zwei elastische Haken (12) gebildet wird, die in der Breite des Bajonettverschlusses (5) an beiden Seiten des Bajonettverschlusses (5) vorgesehen sind und die mit ihrem Fuß (13) an dem zentralen Teil (2) angebracht sind, und wovon das hakenförmige Ende (14) in der Richtung der Breite des betreffenden Bajonettverschlusses (5) bewegbar ist.

2. Befestigungsklammer nach Anspruch 1, **dadurch gekennzeichnet, dass** der Bajonettverschluss (4, 5) durch einen Zapfen (6) mit einem asymmetrisch verbreiterten Kopf (7, 8) mit einer unterschiedlichen Länge (A, B) und Breite (C, D) in zwei quer zueinander stehenden radialen Richtungen gebildet wird, wobei die Breite (C, D) schmaler ist als die Breite (G, I) der Nut (27, 32), worin der Bajonettverschluss befestigt werden muss, und die Länge (A, B) größer ist als die Breite (G, I) der vorgenannten Nut (27, 32).

3. Befestigungsklammer nach den vorhergehenden Ansprüchen, **dadurch gekennzeichnet, dass** der Kopf (8) des Bajonettverschlusses (5) mit einer Verengung der Breite in Form von Aussparungen (9) in gegenüberliegenden Rändern (10) versehen ist und dass die hakenförmigen Enden (14) elastisch bewegbar sind zwischen einer Ruheposition, wobei die Haken (12) über die Breite (D) des Kopfs (8) des Bajonettverschlusses (5) hinausragen, und einer eingedrückten Position, wobei die Haken (12) in die vorgenannten Aussparungen (9) gedrückt sind.

4. Befestigungsklammer nach einem der vorhergehenden Ansprüche, **dadurch gekennzeichnet, dass** die vorgenannten Mittel zum zeitweiligen Festhalten der Befestigungsklammer (1) beim Anbringen in der Nut (27) nur an einer Seite der Befestigungsklammer (1) vorgesehen sind, d.h. an der Seite der Befestigungsklammer (1), die zur Befestigung in oder an dem Rahmen (22) bestimmt ist.

5. Befestigungsklammer nach einem der vorhergehenden Ansprüche, **dadurch gekennzeichnet, dass** mindestens ein Flügel (3) als Leiste ausgeführt ist, die radial an dem zentralen Teil (2) angebracht ist und die an ihrem entferntesten Ende (15) in einem ihrer radial ausgerichteten Ränder (16) mit mindestens einer Kerbe (17) versehen ist.

6. Befestigungsklammer nach Anspruch 5, **dadurch gekennzeichnet, dass** der Flügel (3) mit zwei einander in Querrichtung (17) gegenüberliegenden Kerben (17) versehen ist.

7. Befestigungsklammer nach Anspruch 5 oder 6, **dadurch gekennzeichnet, dass** die Kerben (17) durch eine Basis (19) und zwei Seitenwände (20, 21) definiert sind, wobei eine Seitenwand (20) quer und die andere Seitenwand (21) schräg in Bezug zur Längsrichtung des Flügels (3) ausgerichtet ist.

8. Befestigungsklammer nach Anspruch 7, **dadurch gekennzeichnet, dass** sich die schräge Seitenwand (21) von der Basis (19) zu dem Rand (16) in der Richtung des zentralen Teils (2) schräg erstreckt.

9. Befestigungsklammer nach einem der vorhergehenden Ansprüche, **dadurch gekennzeichnet, dass** der zentrale Teil (2) scheibenförmig ist und dieselbe Dicke (F) wie mindestens ein Flügel (3) aufweist.

10. Fenster, bestehend aus einem Rahmen (22) mit einem daran befestigten Fertigstellungsrahmen (31), **dadurch gekennzeichnet, dass** der Fertigstellungsrahmen (31) mittels einer oder mehrerer Befestigungsklammern (1) nach einem der vorhergehenden Ansprüche an dem Rahmen (22) befestigt ist, wobei sich die zentralen Teile (2) der Befestigungsklammern (1) zwischen beiden Rahmen (22, 31) erstrecken und dadurch daran befestigt sind, dass sich die Bajonettverschlüsse (4, 5) an beiden Seiten des zentralen Teils (2) jeweils in einer Nut (27, 32) der verbundenen Rahmen (22, 31) in einer Position erstrecken, wobei die Befestigungsklammern (1) in eine Position gedreht sind, wobei sich die Flügel (3) im Wesentlichen parallel zu den betreffenden Rahmen (22, 31) erstrecken.

11. Fenster nach Anspruch 10, **dadurch gekennzeichnet, dass** der Rahmen (22) aus Aluminium hergestellt ist und der Fertigstellungsrahmen (31) aus Holz.

12. Verfahren zur Befestigung eines Fertigstellungsrahmens (31) an einem Rahmen (22) eines Fensters oder dergleichen, unter Verwendung von Befestigungsklammern (1) nach einem der Ansprüche 1 bis 11, bestehend aus einem zentralen Teil (2), der mit zwei koaxialen Bajonettverschlüssen (4, 5) an beiden Seiten des zentralen Teils (2) versehen ist, mit Mitteln zum zeitweiligen Festhalten der Befestigungsklammer (1) in dem Rahmen (22) oder dem Fertigstellungsrahmen (31), und mindestens einem radial ausgerichteten Flügel (3) an dem zentralen Teil (2), **dadurch gekennzeichnet, dass** das Verfahren die folgenden Schritte umfasst:
- das Anbringen von Befestigungsklammern (1) in einer zu diesem Zweck in einem der zwei Rahmen (22, 31) vorgesehenen Nut (27, 32), mit mindestens einem Flügel (3) quer zu der Nut (27, 32), derart, dass die Klammern (1) zeitweilig durch die vorgenannten Mittel festgehalten werden;
- das Anbringen des anderen mit einer Nut (27, 32) versehenen Rahmens (22, 31), unter Sicherstellung dessen, dass der anzubringende Rahmen (22, 31) mit seiner Nut (27, 32) über den Bajonettverschlüssen (4, 5) der bereits angebrachten Befestigungsklammern (1) angebracht wird;
- das aneinander Sichern beider Rahmen (22, 31) durch Drehen der Befestigungsklammern (1) um die Achse der Bajonettverschlüsse (4, 5) durch Einwirken auf mindestens einen Flügel (3), um ihn in eine Position parallel zur Längsrichtung der Nuten (27, 32) zu drehen.

13. Verfahren nach Anspruch 12, **dadurch gekennzeichnet, dass** die Befestigungsklammern (1) gleichmäßig verteilt über den gesamten Umfang des Rahmens (22) oder Fertigstellungsrahmens (31) platziert werden.

14. Verfahren nach Anspruch 12 oder 13, **dadurch gekennzeichnet, dass** der Rahmen (22) aus Aluminium hergestellt ist und der Fertigstellungsrahmen (31) aus Holz.

15. Verfahren nach einem der Ansprüche 12 bis 14, **dadurch gekennzeichnet, dass** zum Drehen mindestens eines Flügels (3) von einem Werkzeug Gebrauch gemacht wird, wie etwa einem Schraubendreher oder dergleichen, der in eine Kerbe (17) an einem radialen Rand (16) mindestens eines Flügels (3) passt.

## Revendications

1. Bride de fixation pour la fixation d'un cadre de finition (31) contre un cadre (22) d'une fenêtre ou analogue, dans laquelle les cadres (22, 31) sont composés de profilés (23) et dans laquelle la bride de fixation (1) est constituée d'une partie centrale (2) et de deux fermetures coaxiales à baïonnettes (4, 5) de chaque côté de la partie centrale (2), respectivement une fermeture à baïonnette (5) pour l'attachement de la bride de fixation (1) dans une rainure à contre-dépouille (27) prévue à cet effet dans le cadre (22) et sa fixation par rotation de la bride de fixation (1) et une fermeture à baïonnette (4) pour l'attachement de la bride de fixation (1) dans une rainure à contre-dépouille (32) prévue à cet effet dans le cadre de finition (31) et sa fixation par rotation de la bride de fixation (1) ; dans laquelle la bride de fixation (1) est munie de moyens pour maintenir de manière temporaire la bride de fixation (1) après son attachement dans la rainure (27) du cadre (22) ou du cadre de finition (31) et d'au moins une aile (3) orientée en direction radiale sur la partie centrale (2), qui peut faire office de levier pour la mise en rotation de la bride de fixation (1), **caractérisée en ce que** les moyens susmentionnés pour maintenir de manière temporaire la bride de fixation sont réalisés via un raccord par encliquetage (11), ledit raccord par encliquetage (11) étant réalisé à l'aide de deux crochets élastiques (12) qui sont prévus dans la largeur de la fermeture à baïonnette (5) de chaque côté de la fermeture à baïonnette (5) et qui sont attachés par leur base (13) à la partie centrale (2) et dont l'extrémité (14) en forme de crochet est mobile dans la direction de la largeur de la fermeture à baïonnette (5) concernée.

2. Bride de fixation selon la revendication 1, **caractérisée en ce que** la fermeture à baïonnette (4, 5) est réalisée au moyen d'un tourillon (6) comportant une tête (7,8) à élargissement asymétrique possédant une longueur (A, B) et une largeur (C, D) différentes dans deux directions radiales transversales l'une par rapport à l'autre, dans laquelle la largeur (C, D) est plus étroite que la largeur (G, I) de la rainure (27, 32) dans laquelle la fermeture à baïonnette doit être fixée, et la longueur (A, B) est supérieure à la largeur (G, I) de la rainure susmentionnée (27, 32).

3. Bride de fixation selon les revendications précédentes, **caractérisée en ce que** la tête (8) de la fermeture à baïonnette (5) est munie d'un rétrécissement de la largeur sous la forme d'évidements (9) dans des bords opposés (10), et **en ce que** les extrémités (14) en forme de crochets sont élastiquement mobiles entre une position de repos dans laquelle les crochets (12) font saillie au-delà de la largeur (D) de la tête (8) de la fermeture à baïonnette (5), et une position d'insertion par pression dans laquelle les crochets (12) sont comprimés dans les évidements susmentionnés (9).

4. Bride de fixation selon l'une quelconque des revendications précédentes, **caractérisée en ce que** les moyens susmentionnés pour maintenir de manière temporaire la bride de fixation (1) après son attachement dans la rainure (27) sont uniquement prévus d'un côté de la bride de fixation (1), c'est-à-dire du côté de la bride de fixation (1) qui est destiné à venir se fixer dans ou contre le cadre (22).

5. Bride de fixation selon l'une quelconque des revendications précédentes, **caractérisée en ce qu'**au moins une aile (3) est conçue sous la forme d'une latte qui est attachée en direction radiale à la partie centrale (2) et qui est munie d'au moins une encoche (17) dans un de ses bords (16) orientés en direction radiale, à son extrémité la plus éloignée (15).

6. Bride de fixation selon la revendication 5, **caractérisée en ce que** l'aile (3) est munie de deux encoches (17) opposées l'une à l'autre dans la direction transversale (17).

7. Bride de fixation selon la revendication 5 ou 6, **caractérisée en ce que** les encoches (17) sont définies par une base (19) et deux parois (20, 21), une paroi (20) étant orientée en direction transversale et l'autre paroi (21) étant oblique par rapport à la direction longitudinale de l'aile (3).

8. Bride de fixation selon la revendication 7, **caractérisée en ce que** la paroi oblique (21) s'étend en oblique à partir de la base (19) jusqu'au bord (16) dans la direction de la partie centrale (2).

9. Bride de fixation selon l'une quelconque des revendications précédentes, **caractérisée en ce que** la partie centrale (2) possède une configuration en forme de disque et a la même épaisseur (F) que celle d'au moins une aile (3).

10. Fenêtre constituée d'un cadre (22) auquel est fixé un cadre de finition (31), **caractérisée en ce que** le cadre de finition (31) est fixé au cadre (22) au moyen d'une ou de plusieurs brides de fixation (1) selon une des revendications précédentes, dans laquelle les parties centrales (2) des brides de fixation (1) s'étendent entre les deux cadres (22, 31) et y sont fixées via les fermetures à baïonnettes (4, 5) sur chaque côté de la partie centrale (2), s'étendant respectivement dans une rainure (27, 32) des cadres reliés (22, 31) dans une position dans laquelle les brides de fixation (1) effectuent une rotation pour prendre une position dans laquelle les ailes (3) s'étendent essentiellement parallèlement aux cadres respectifs (22, 31).

11. Fenêtre selon la revendication 10, **caractérisée en ce que** le cadre (22) est réalisé en aluminium et le cadre de finition (31) est en bois.

12. Procédé pour la fixation d'un cadre de finition (31) contre un cadre (22) d'une fenêtre ou analogue, en faisant usage de brides de fixation (1) selon l'une quelconque des revendications 1 à 11, constituées d'une partie centrale (2) munie de deux fermetures coaxiales à baïonnettes (4, 5) de chaque côté de la partie centrale (2), comprenant des moyens pour maintenir de manière temporaire la bride de fixation (1) dans le cadre (22) ou dans le cadre de finition (31) et au moins une aile (3) orientée en direction radiale sur la partie centrale (2), **caractérisé en ce que** le procédé comprend les étapes suivantes :
- l'attachement de brides de fixation (1) dans une rainure (27, 32) prévue à cet effet dans un des cadres (22, 31), au moins une aile (3) étant disposée transversalement par rapport à la rainure (27, 32) d'une manière telle que les brides (1) sont maintenues de manière temporaire par les moyens susmentionnés ;
- l'attachement de l'autre cadre (22, 31) muni d'une rainure (27, 32) garantissant le fait que le cadre (22, 31) qui doit être attaché est attaché avec sa rainure (27, 32) par-dessus les fermetures à baïonnettes (4, 5) desdites brides de fixation (1) déjà attachées ;
- la fixation réciproque des deux cadres (22, 31) en faisant tourner les brides de fixation (1) autour de l'axe des fermetures à baïonnettes (4, 5) en agissant sur au moins une aile (3) pour la faire tourner jusque dans une position parallèle à la direction longitudinale des rainures (27, 32).

13. Procédé selon la revendication 12, **caractérisé en ce que** les brides de fixation (1) sont placées en étant réparties de manière égale sur toute la périphérie du cadre (22) ou du cadre de finition (31).

14. Procédé selon la revendication 12 ou 13, **caractérisé en ce que** le cadre (22) est réalisé en aluminium et le cadre de finition (31) est en bois.

15. Procédé selon l'une quelconque des revendications 12 à 14, **caractérisé en ce que**, pour la mise en rotation d'au moins une aile (3), il est fait usage d'un outil tel qu'un tournevis ou analogue, qui vient s'insérer dans une encoche (17) sur un bord radial (16) d'au moins une aile (3).
